# EUROPÄISCHE PATENTSCHRIFT

(11) **EP 0 982 165 B1**
(45) Veröffentlichungstag und Bekanntmachung des Hinweises auf die Patenterteilung: **23.10.2002**
(21) Anmeldenummer: 99115632.4
(22) Anmeldetag: 07.08.1999
(51) Int. Cl.: B60J 5/04, E05F 11/48

(54) **Seilfensterheber für eine Kraftfahrzeugtür**
Cable type window winder for a vehicle door
Lève-vitre à câble pour une porte de véhicule

(30) Priorität: 19.08.1998 DE 19837560
(43) Veröffentlichungstag der Anmeldung: 01.03.2000
(73) Patentinhaber: Kiekert Aktiengesellschaft, 42579 Heiligenhaus (DE)
(72) Erfinder: Kasper, Andreas, 48249 Dülmen (DE); Kill, Jürgen, 50733 Köln (DE); Schengolies, René, 42551 Velbert (DE)
(74) Vertreter: Nunnenkamp, Jörg, Dr.

(56) Entgegenhaltungen:
- EP-A- 0 420 617
- EP-A- 0 796 753
- EP-A- 0 855 301
- DE-A- 3 144 497
- GB-A- 2 093 908
- US-A- 4 753 125
- US-A- 5 778 600

## Beschreibung

Die Erfindung betrifft einen Seilfensterheber für eine Kraftfahrzeugtür mit Fensterscheibe mit folgenden Merkmalen:
a) an jeweils zumindest einen heb- und senkbaren ersten und zweiten Scheibenträger ist ein Seilzug angeschlossen,
b) der Seilzug ist mit einem reversierend arbeitenden Antrieb versehen,
c) die beiden Scheibenträger sind zusätzlich durch einen Verbindungsseilzug gekoppelt,
d) zur Justage der Fensterscheibe bei Schrägstellung (beispielsweise im Vergleich zur Fensteraussparung im Fensterrahmen) wird die Fensterscheibe unter Blockade des zweiten Scheibenträgers mittels des nicht blockierten ersten Scheibenträgers bis zu dessen Blockade - im Fensterrahmen drehend - ausgerichtet, oder umgekehrt,
e) die sich hierdurch erhöhende Spannung im Verbindungsseilzug wird mit Hilfe einer Federspannvorrichtung ausgeglichen. - Die Scheibenträger werden allgemein an Führungsschienen geführt.

Bei einem Seilfensterheber der eingangs beschriebenen Ausgestaltung bilden Seilzug und Verbindungsseilzug eine Einheit als geschlossene Schleife in der Form einer liegenden Acht. Dabei ist die bekannte Fensterscheibe bzw. das zugehörige Seil durch eine Antriebsvorrichtung bewegbar. Stößt beim Hochkurbeln der Fensterscheibe zunächst ein Anschlag an, ist folglich die Fensterscheibe im Vergleich zur Fensteraussparung im Fensterrahmen schräggestellt (Blockade des zweiten Scheibenträgers), wird über die vorgenannte Antriebsvorrichtung weiterhin eine Zugkraft auf das Seil ausgeübt. Mit anderen Worten wird die bekannte Fensterscheibe unter Blockade des zweiten Scheibenträgers mittels des nicht blockierten ersten Scheibenträgers bis zu dessen Blockade ausgerichtet, und zwar indem die Fensterscheibe im Fensterrahmen entsprechend gedreht wird. Selbstverständlich kann in gleicher Weise vorgegangen werden, wenn kein Fensterrahmen vorhanden ist, wie das beispielsweise bei Cabrio-Kraftfahrzeugtüren der Fall ist.

Jedenfalls wird die sich durch den vorbeschriebenen Ausrichtvorgang erhöhende Spannung im Verbindungsseilzug mit Hilfe einer Federspannvorrichtung ausgeglichen. Diese Federspannvorrichtung ist relativ kompliziert aufgebaut und setzt sich aus einem Federelement sowie einem zugehörigen Gehäuse zusammen, welches die Feder bzw. das Federelement und das Seil umschließt. Mit diesem Gehäuse ist ein (erster) Anschlag bzw. der zweite Scheibenträger fest verbunden. Folglich führt bei einer Blockade dieses Anschlages bzw. Scheibenträgers ein weiteres Hochkurbeln der Fensterscheibe dazu, daß die bekannte Feder im Gehäuse zusammengedrückt wird. Das Seil wird bei feststehendem Anschlag noch so viel weiterbewegt, bis ein zweiter Anschlag bzw. der erste Scheibenträger blockiert.

Durch die im System angeblich vorhandene Selbsthemmung, insbesondere der bekannten Antriebsvorrichtung, glaubt man ausschließen zu können, daß sich die Feder nach dieser Prozedur wieder entspannt und folglich die Fensterscheibe wiederum schräggestellt wird. - Allerdings ist eine derartige Vorgehensweise in Verbindung mit elektrisch zu betätigenden Seilfensterhebern schon deshalb unbefriedigend, weil in einem solchen Fall die zugehörige Fensterscheibe bei jeder Betätigung zunächst schräggestellt und dann erst ausgerichtet wird. Dies ist mit Blick auf die erreichbare Lebensdauer sowie hiermit verbundene Geräuschentwicklung und auch aus bedienungstechnischen Gründen nachteilig (vgl. DE-A-39 25 864).

Ähnliche Seilfensterheber - wenngleich ohne Justagemöglichkeit - sind durch die deutsche Patentschrift 44 26 426 bekannt geworden. Der hier beschriebene Seilfensterheber ist an einer sogenannten Fensterkassette befestigt, welche ihrerseits mit dem Türinnenblech verschraubt wird. Die bekannte Fensterkassette kann - wie allgemein ein Türaggregateträger - neben einem Fensterheber auch weitere Bauteile wie ein Türschloß, eine Zentralverriegelung, einen Außenspiegel, Lautsprecher, (Seiten-)Airbag, Steuergerät usw. aufnehmen. Außerdem sind bei der bekannten Kraftfahrzeugtür bereits ein elektrischer Motorantrieb, Führungsschienen, ein erforderlicher Seilzug sowie eine Fensterscheibe vormontiert.

Ein vergleichbarer Seilzugheber bzw. Seilfensterheber wird in der WO 96/30226 beschrieben. Beiden bekannten Lehren ist gemein, daß die Führungsschienen für die Fensterscheibe am Türaggregateträger befestigt werden, welcher seinerseits am Türinnenblech fixiert wird. Das Türinnenblech selbst ist wiederum über (Punkt-)Schweißverbindungen mit dem Türaußenblech verbunden. Aufgrund von fertigungsbedingten Toleranzen zwischen Türinnenblech und Türaußenblech, ferner zwischen Türinnenblech und Türaggregateträger sowie schließlich zwischen Türaggregateträger und Führungsschienen kann es in der Praxis passieren, daß die an den Führungsschienen geführte Fensterscheibe im Vergleich zur Fensteraussparung nicht spaltfrei ausgerichtet ist. Das heißt, die vorgenannten Toleranzen können zu einer Verdrehung der Fensterscheibe in bezug auf die Fensteraussparung und damit den zugehörigen Fensterrahmen führen. Als Folge hiervon ist damit zu rechnen, daß die Fensterscheibe beim Heben bzw. Hochfahren eventuell nicht rundherum in den Fensterrahmen einfährt und schlimmstenfalls ein Spalt offen bleibt.

Als Abhilfe hat man in der EP-B 0 794 875 zu diesem Zweck wenigstens eine Öffnung im Türaggregateträger vorgesehen, um vom Türinnenraum her die Fensterscheibe am Fensterheber montieren zu können bzw. zumindest eine Ausrichtung vornehmen zu können. Abgesehen davon, daß eine solche Vorgehensweise aus montagetechnischer Sicht unbefriedigend ist, muß hier immer noch dafür gesorgt werden, daß die vorgenannte Öffnung zur Justage der Fensterscheibe verschlossen wird, und zwar abdichtend. Dies ist erforderlich, um eine möglichst zuverlässige und wasserdichte Trennung zwischen Türinnenraum (sogenanntem Trockenraum) und dem außenliegenden sogenannten Naßraum zu gewährleisten. - Hier will die Erfindung insgesamt Abhilfe schaffen.

Der Erfindung liegt das technische Problem zugrunde, einen Seilfensterheber des eingangs beschriebenen Aufbaus so weiterzubilden, daß eine einfache und zuverlässige Justage der zugehörigen Fensterscheibe ermöglicht wird. Dies gilt insbesondere mit Blick auf eine elektrische Betätigung dieser Fensterscheibe. Außerdem soll eine einwandfreie Abdichtung des Türinnenraums gewährleistet sein.

Zur Lösung dieser Aufgabe schlägt die Erfindung bei einem gattungsgemäßen Seilfensterheber vor, daß die Federspannvorrichtung dem Verbindungsseilzug zugeordnet und zur Festlegung der Spannung des Verbindungsseilzugs bzw. seines "Durchhanges" nach beendeter Justage bzw. Montage fixierbar ist, so daß die Spannung des Verbindungsseilzuges definiert festgelegt ist. - Bei dem Seilzug bzw. Verbindungsseilzug kommen in üblicher Weise Stahlseile zum Einsatz. Selbstverständlich sind auch Kunststoffseile oder Seile aus anderen Materialien denkbar. Grundsätzlich kann hier auch auf einen (spannbaren) Zahnriemen oder sogar eine Art Gliederkette zurückgegriffen werden.

Nach bevorzugter Ausführungsform ist der Seilfensterheber mit seinen sämtlichen Bestandteilen auf einem Türaggregateträger angeordnet, welcher in eine Montageausnehmung eines Türinnenblechs einsetzbar ist. Üblicherweise ist die Federspannvorrichtung an den Türaggregateträger angelenkt, so daß der vorbeschriebene Seilfensterheber mit sämtlichen für seine Funktion erforderlichen Aggregaten auf dem beschriebenen Türaggregateträger vormontiert und entsprechend ausgerichtet werden kann. Damit diese Ausrichtung problemlos beibehalten wird bzw. die Fensterscheibe dauerhaft ausgerichtet ist, sieht die Ausführungsform ferner vor, daß die Federspannvorrichtung eine im Zuge ihrer Fixierung verstellbare Federbasis aufweist.

Nach einem weiteren Ausführungsform der Erfindung mit selbständiger Bedeutung weist der Verbindungsseilzug eine Seilzughülle mit endseitiger Druckfeder als Federspannvorrichtung auf, welche sich einerseits an einem verschiebbaren Lagerbock als verstellbare Federbasis und andererseits an einem Festpunkt abstützt. Dieser Lagerbock ist in der Regel in eine Längsführung (vorzugsweise am Türaggregateträger) eingesetzt und in Richtung des Verbindungsseilzuges verschiebbar. Nach Ausrichtung der Fensterscheibe und Verschiebung des Lagerbocks läßt sich dieser fixieren.

Alternativ hierzu kann die Federspannvorrichtung als Exzenter ausgebildet sein, welcher federunterstützt gegen den Verbindungsseilzug angestellt ist. Dieser Exzenter kann darüber hinaus zumindest einen Auslegerarm aufweisen oder zwei in bezug auf eine gemeinsame Drehachse diametral gegenüberliegende Auslegerarme besitzen, wobei der Verbindungsseilzug um zugehörige Seilzapfen S-förmig geschlungen ist. Bei diesen Seilzapfen handelt es sich im einfachsten Fall um Seilrollen. Diese Seilrolle(n) ist (sind) im allgemeinen am Ausleger vorgesehen und liegt (liegen) gegen den Verbindungsseilzug an.

Üblicherweise ist die Federspannvorrichtung mittels ihrer bzw. der vorgenannten Drehachse drehbar an den Türaggregateträger angelenkt und weist eine die Drehachse umschließende Schraubenfeder auf. Dabei stützt sich im allgemeinen ein Ende der Schraubenfeder am Türaggregateträger ab, während das andere Ende am Exzenter anliegt und diesen - entsprechend mit Federkraft beaufschlagt - gegen den Verbindungsseilzug drückt und als verstellbare Federbasis wirkt. Die Drehachse kann eine Durchgangsverschraubung zur wahlweisen Fixierung der Stellung des Exzenters und damit wahlweisen Verstellung der vorgenannten Federbasis aufweisen. Schließlich wird der Türaggregateträger bevorzugt unter Abdichtung der Montageausnehmung am Türinnenblech befestigt.

Durch diese Maßnahmen der Erfindung wird zunächst einmal eine einfache und zuverlässige Justage der Fensterscheibe am Seilfensterheber erreicht. Denn diese Justage wird nun nicht mehr von Hand, sondern quasi automatisch vorgenommen. Im einzelnen sieht die Erfindung vor, daß der erste Scheibenträger in Heb- bzw. Senkrichtung der Fensterscheibe mit Abstand von dem zweiten Scheibenträger unter Schrägstellung der Fensterscheibe angeordnet ist. Dies kann von vornherein so eingerichtet werden oder zufälligerweise der Fall sein. Jedenfalls wird bei schräggestellter Fensterscheibe und damit verbundener unterschiedlicher "Höhe" der angebrachten Scheibenträger erreicht, daß die Fensterscheibe zunächst einseitig am Fensterrahmen oder einem anderen Anschlag innerhalb der Kraftfahrzeugtür anschlägt (sofern es sich um eine Cabrio- oder Coupé-Kraftfahrzeugtür handelt). Dies geschieht am Berührungspunkt, wobei es sich selbstverständlich an dieser Stelle auch um eine Berührungsfläche handeln kann.

In jedem Fall wird die Fensterscheibe zum Zwecke des Justierens in Schrägstellung im Vergleich zur Fensteraussparung bzw. der Kraftfahrzeugtür zunächst hochgefahren, und zwar solange, bis sie am Fensterrahmen bzw. einem zugehörigen Anschlag in der Kraftfahrzeugtür im Berührungspunkt anschlägt. Ein weiteres Heben der Fensterscheibe ist nun nicht mehr möglich, weil der unterhalb des Berührungspunktes angeordnete zweite Scheibenträger durch das Anschlagen der Fensterscheibe am Fensterrahmen blockiert wird. Mit anderen Worten läßt sich zum Schließen der Fensterscheibe diese lediglich noch drehend ausrichten.

In dieser Stellung kann folglich nur mehr noch der erste Scheibenträger mittels des Antriebes bewegt werden. Dies führt dazu, daß gleichzeitig der die beiden Scheibenträger koppelnde Verbindungsseilzeug zunehmend gespannt wird, welcher üblicherweise einen bestimmten und vorgegebenen "Durchhang" aufweist. Dieser Verbindungsseilzug dient regelmäßig dazu, auf den jeweils einen Scheibenträger aufgebrachten Zugkräfte auch auf den anderen Scheibenträger zu übertragen. Zu diesem Zweck formen Seilzug und Verbindungsseilzug eine gleichsam N-förmige Anordnung, wie dies allgemein bekannt ist und beispielsweise in der DE-PS 44 26 426 im Detail beschrieben wird. Jedenfalls wird der Seilzug vom Antrieb auch bei einseitig blockierter Fensterscheibe weiter angetrieben und auf einer zugehörigen Wickeltrommel aufgerollt, so daß die Fensterscheibe - im Fensterrahmen drehend - mittels des nicht blockierten ersten Scheibenträgers bis zu dessen Blockade ausgerichtet wird. Mit anderen Worten ist die Ausrichtung beendet, sobald auch der erste Scheibenträger blockiert wird.

Diese Blockade läßt sich unschwer über eine Auswertung des Antriebsstromes für den Antrieb feststellen, so daß der Zeitpunkt für das Justageende einwandfrei festgelegt werden kann. Gleichzeitig wird der Antrieb gestoppt, nämlich dann, wenn die vorher schräg eingelegte Scheibe soweit verschwenkt wurde, daß sie komplett in den Fensterrahmen eingefahren ist und somit die Fensteraussparung perfekt verschließt. In dieser Situation wird die Federspannvorrichtung bzw. die Seilzughülle oder der Exzenter fixiert, so daß gleichzeitig die Spannung des Verbindungsseilzuges in der Justagestellung definiert ist.

Dadurch, daß mit Blick auf den Verbindungsseilzug mit gleichsam justagebedingtem Durchhang bzw. durch die Ausrichtung variabler Spannung gearbeitet wird, läßt sich der Verbindungsseilzug nach beendetem Ausrichtvorgang mit der gewünschten Spannung beaufschlagen, die für eine anschließende einwandfreie Betätigung des Seilfensterhebers erforderlich und notwendig ist.

Unter dem Strich wird eine besonders einfache Justage ermöglicht, die den weiteren Vorteil aufweist, daß die zur Fixierung der Federspannvorrichtung vorgesehene Durchgangsverschraubung durch den Türaggregateträger nach außen geführt sein kann, so daß zusätzliche Montageöffnungen entfallen. Sobald der Türaggregateträger in die Montageöffnung eingesetzt ist, wird hierdurch eine zuverlässige und dichtende Trennung zwischen Trockenraum und Naßraum erreicht. Dabei kann die entsprechende Fixierung der Schraubverbindung (Durchgangsverschraubung) bzw. des Lagerloches oder Exzenters im einfachsten Fall durch einen außenseitig angesetzten Schraubendreher erfolgen. Denkbar ist in diesem Zusammenhang auch, daß hierdurch alterungsbedingte Längungen des Verbindungsseilzugs ausgeglichen werden können. Hierin sind die wesentlichen Vorteile der Erfindung zu sehen.

Weitere vorteilhafte Ausgestaltungen sind im folgenden beschrieben. So weist der Seilzug bevorzugt eine Seilspannvorrichtung auf, welche der Tatsache Rechnung trägt, daß bei der Justage der Fensterscheibe zwar das Verbindungsseil gespannt, dafür aber der Seilzug gelockert wird. Um diesem Umstand zu begegnen, ist die Seilspannvorrichtung vorgesehen. Diese kann als am Türaggregateträger angelenkter, federunterstützter Schwenkhebel ausgeführt sein. Alternativ hierzu besteht auch die Möglichkeit, die Seilspannvorrichtung als zwei koaxial gelagerte Wickeltrommeln auszuführen, wobei die Wickeltrommeln mittels einer Feder zur Aufrechterhaltung der Seilspannung des Seilzuges in entgegengesetzte Wickelrichtungen beaufschlagt sind. Das heißt, es kann prinzipiell so verfahren werden, wie dies in der DE 197 38 795 beschrieben ist, auf die ausdrücklich Bezug genommen wird. Endlich wird der Türaggregateträger bevorzugt inklusive Führungsschienen für die Scheibenträger, Scheibenträgern, Antrieb, Seilzug und Verbindungsseilzug (inklusive Federspannvorrichtung) sowie gegebenenfalls Seilrollen am Türinnenblech montiert, so daß ein kompaktes Bauteil zur Verfügung gestellt wird, welches gleichzeitig schnell und den Trockenraum abdichtend montierbar ist.

Im folgenden wird die Erfindung anhand einer lediglich ein Ausführungsbeispiel darstellenden Zeichnung näher erläutert; es zeigen:
- **Fig. 1**: eine erfindungsgemäße Kraftfahrzeugtür,
- **Fig. 2**: einen Ausschnitt aus Fig. 1 im Bereich des Seilfensterhebers,
- **Fig. 3a**: eine Aufsicht auf eine erste Ausführungsform der Federspannvorrichtung,
- **Fig. 3b**: eine Seitenansicht des Gegenstandes nach Fig. 3a,
- **Fig. 4**: eine abgewandelte Ausführungsform nach Fig. 1 in schematischer Darstellung,
- **Fig. 5**: eine zweite Ausführungsform der Federspannvorrichtung und
- **Fig. 6**: eine Detailansicht des Gegenstandes aus Fig. 5.

In den Figuren ist eine Kraftfahrzeugtür mit einem Türaußenblech 1 und einem Türinnenblech 2 mit Montageausnehmung 3 für einen hierin einsetzbaren Türaggregateträger 4 gezeigt. Dieser Türaggregateträger 4 weist einen hierauf angeordneten Seilfensterheber 5 auf, welcher in seinem grundsätzlichen Aufbau zumindest einen ersten Scheibenträger 5a und einen zweiten Scheibenträger 5b besitzt. Beide Scheibenträger 5a, 5b sind heb- und senkbar in zugeordneten Führungsschienen 23 geführt und dienen zur Halterung einer hieran befestigten Fensterscheibe 6. Zusätzlich sind ein Seilzug 7 sowie ein Verbindungsseilzug 8 verwirklicht. Auf den Seilzug 7 arbeitet ein reversierender Antrieb 9, bei welchem es sich nach dem Ausführungsbeispiel um einen üblichen Elektromotor handelt, dessen Antriebsstrom zur Festlegung von Blockaden oder dergleichen gemessen wird. Es sollte betont werden, daß die Erfindung an dieser Stelle selbstverständlich auch die Realisierung einer Kurbelvorrichtung umfaßt, wie sie beispielsweise in der DE 39 25 864 beschrieben ist. Der Verbindungsseilzug 8 ist strichpunktiert bzw. punktiert dargestellt und koppelt die beiden Scheibenträger 5a, 5b.

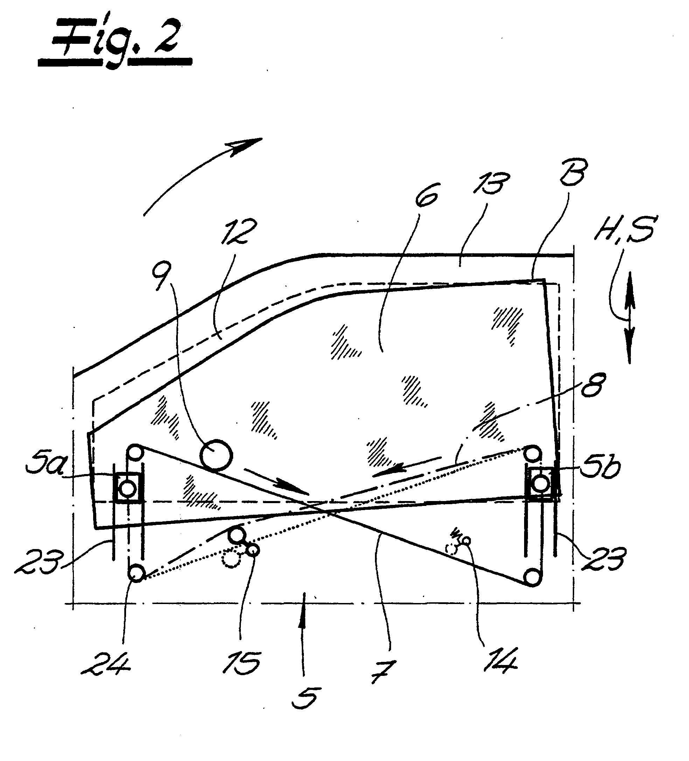

Anhand der Fig. 2 erkennt man die grundsätzlich N-förmige Anordnung von Seilzug 7 sowie Verbindungsseilzug 8, welche eine geschlossene Schleife bilden. Zum Heben und Senken der Fensterscheibe 6 wird lediglich ein Scheibenträger 5a, 5b beaufschlagt, während der andere Scheibenträger 5a, 5b über den Verbindungsseilzug 8 entsprechend "mitgenommen" wird. Zum Heben der Fensterscheibe 6 wird im einzelnen beispielsweise mittels des Antriebes 9 ein Zug in Pfeilrichtung am ersten Scheibenträger 5a erzeugt. Dieser Zug in Pfeilrichtung führt über den Verbindungsseilzug 8 ebenfalls zu einem Zug in dortiger Pfeilrichtung, welcher dafür sorgt, daß der zweite Scheibenträger 5b ebenfalls nach oben bewegt wird. Insgesamt wird auf diese Weise die an die beiden Scheibenträger 5a, 5b angeschlossene Fensterscheibe 6 gehoben. Der Senkvorgang erfolgt in der Weise, daß die Drehrichtung des Antriebes 9 geändert wird, und zwar in der Weise, daß dieser nun den zweiten Scheibenträger 5b nach unten zieht und über den Verbindungsseilzug 8 eine gleichgerichtete Zugbewegung am ersten Fensterträger 5a erfolgt. Jedenfalls läßt sich die Fensterscheibe 6 durch entsprechende Wahl der Drehrichtung des Antriebes 9 heben und senken.

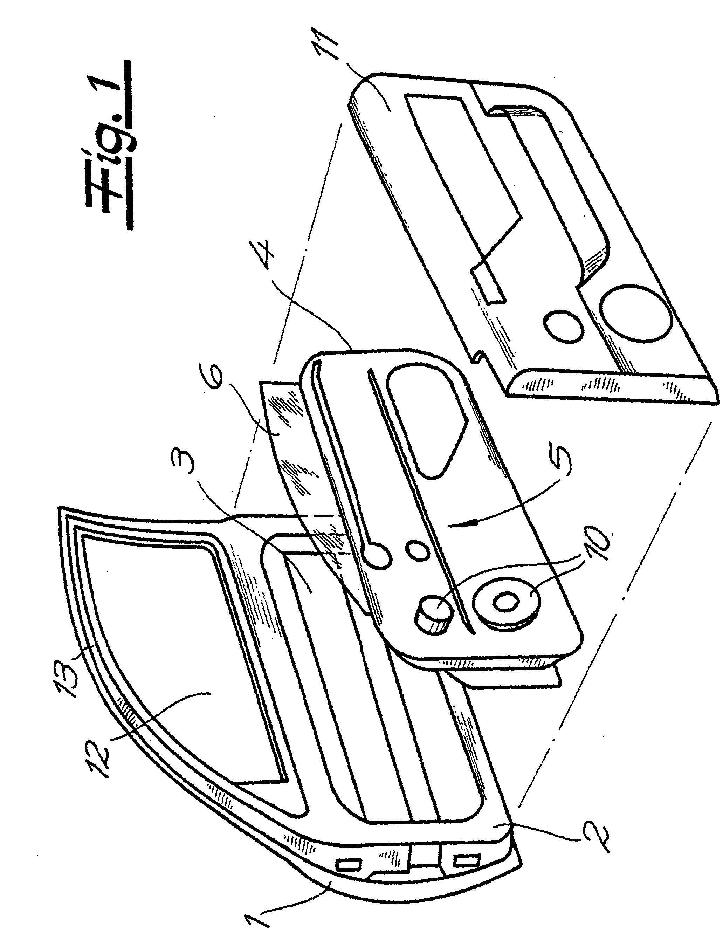

Der Türaggregateträger 4 kann neben dem Seilfensterheber 5 zusätzliche Aggregate aufweisen, wobei an dieser Stelle lediglich Lautsprecher 10 angedeutet sind (vgl. Fig. 1). Nach Einbau des Türaggregateträgers 4 in die Montageausnehmung 3 kann abschlußseitig eine Innenverkleidungsplatte 11 aufgesetzt werden, wie dies allgemein üblich aber nicht zwingend ist.

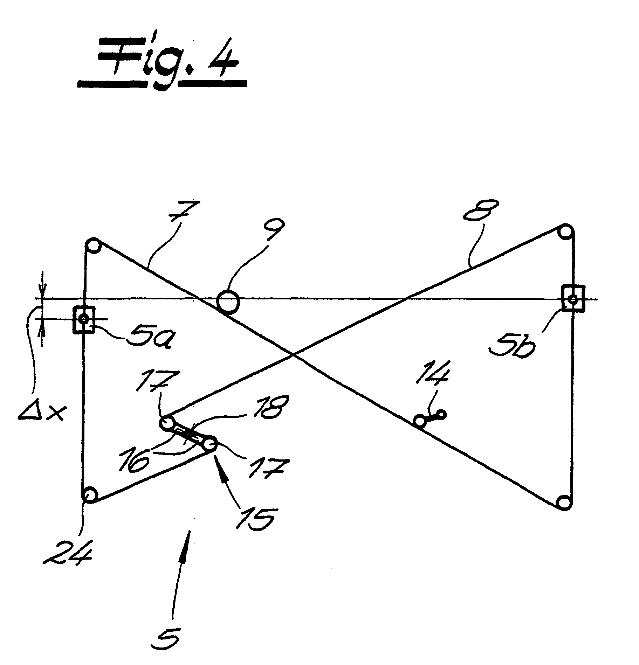

Zur Justage der Fensterscheibe 6 ist der erste Scheibenträger 5a ausweislich der Fig. 2 in Heb- und Senkrichtung der Fensterscheibe 6 (vgl. den Doppelpfeil H, S in Fig. 2) mit Abstand Δx von dem zweiten Scheibenträger 5b unter Schrägstellung der Fensterscheibe 6 im Vergleich zur Fensteraussparung 12 im Fensterrahmen 13 angeordnet. Diese geometrischen Verhältnisse sind insbesondere in Fig. 4 zu erkennen. Die Ausrichtung der Fensterscheibe 6 erfolgt nun im Zuge des Hebens dieser Fensterscheibe 6. Infolge ihrer Schrägstellung schlägt die Fensterscheibe 6 an einen Berührungspunkt B am Fensterrahmen 13 an (vgl. Fig. 2). Gleichzeitig wird der unterhalb des Berührungspunktes B angeordnete zweite Scheibenträger 5b blockiert. Da zu diesem Zweck (Heben der Fensterscheibe 6) der Antrieb 9 in Pfeilrichtung beaufschlagt wird, d. h. den ersten Scheibenträger 5a gleichsam "nach oben" zieht, schaltet der Antrieb 9 (noch) nicht ab. Denn der erste Scheibenträger 5a kann noch bewegt werden, und zwar dergestalt, daß die Fensterscheibe 6 in der Fensteraussparung 12 gedreht wird, und zwar in der durch einen Pfeil in Fig. 2 angedeuteten Art und Weise. - Selbstverständlich ist eine Justage der Fensterscheibe 6 nicht erforderlich, wenn der Abstand Δx Null beträgt und folglich die Fensterscheibe 6 nicht schräggestellt ist. Außerdem liegt selbstverständlich auch eine umgekehrte Reihenfolge der beschriebenen Verfahrensschritte im Rahmen der Erfindung, d. h., daß die Scheibenträger 5a, 5b die Rollen tauschen.

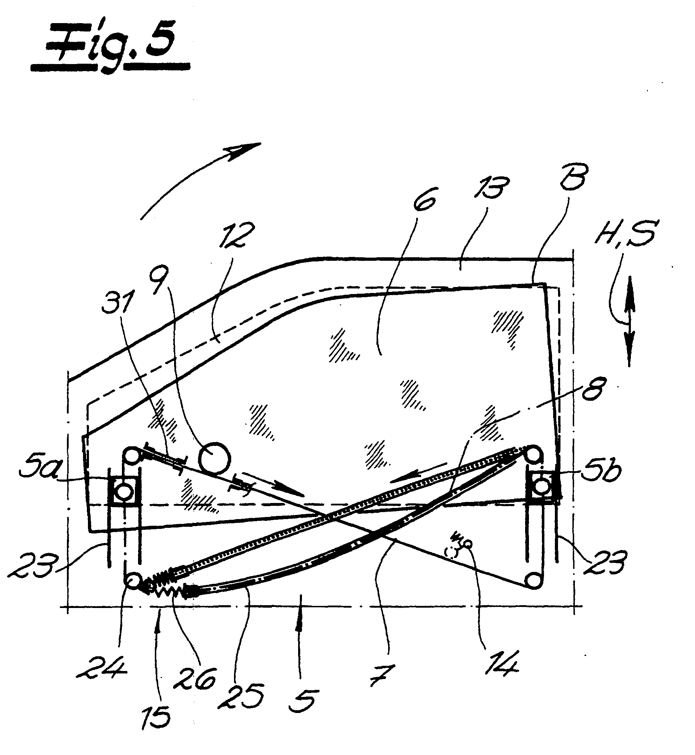

Durch die vorerwähnte Drehung wird gleichzeitig der Verbindungsseilzug 8 gespannt, weil der zweite Scheibenträger 5b blockiert ist. Parallel hierzu hängt der Seilzug 7 zunehmend durch, so daß eine Seilspannvorrichtung 14 für Abhilfe sorgt, die in Fig. 2 lediglich angedeutet ist. Die Fensterscheibe 6 wird folglich mittels des nicht blockierten ersten Scheibenträgers 5a bis zu dessen Blockade ausgerichtet. Die Blockade dieses Scheibenträgers 5a läßt sich unschwer über den ausgewerteten Antriebsstrom für den Antrieb 9 ermitteln. Jedenfalls wird der Verbindungsseilzug 8 zunehmend gespannt, wobei eine Federspannvorrichtung 15 entsprechend ausgelenkt bzw. gespannt wird, wie dies in den Fig. 2 und 5 durch die strichpunktiert dargestellte Ausgangsstellung und die punktiert gezeigte Justageendstellung angedeutet ist. Nach beendeter Ausrichtung läßt sich die Federspannvorrichtung 15 fixieren. Zu diesem Zweck ist die Federspannvorrichtung 15 als Exzenter 15 (Fig. 2) oder Seilzughülle 25 mit Druckfeder 26 (Fig. 5) ausgebildet, welche beide federunterstützt gegen den Verbindungsseilzug 8 angestellt sind bzw. auf diesen einwirken.

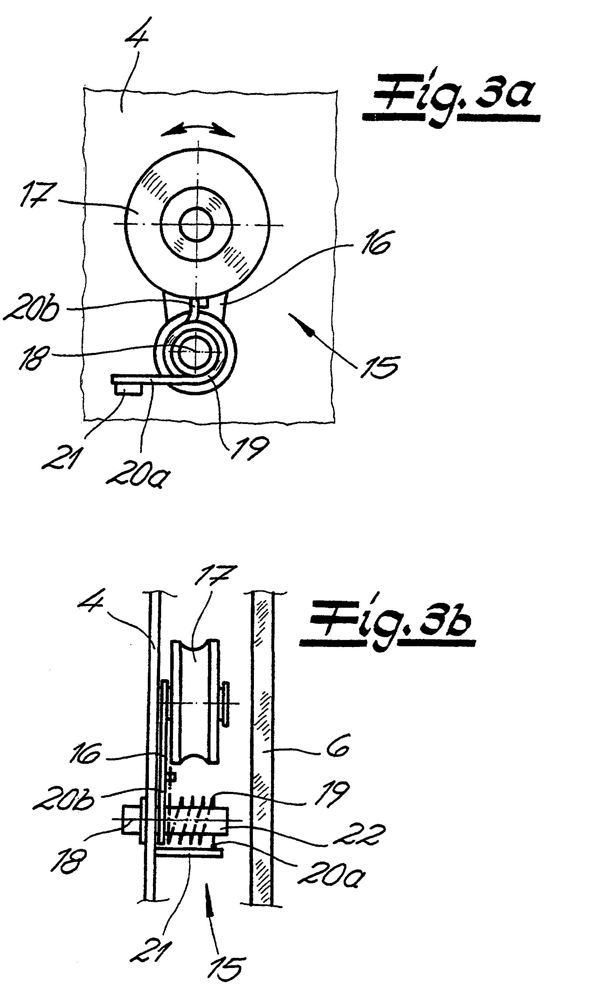

Der Exzenter 15 besitzt ausweislich der Fig. 3a und 3b einen Auslegerarm 16 mit einer endseitigen Seilrolle 17. Nach der in Fig. 4 gezeigten Variante sind zwei in bezug auf eine gemeinsame Drehachse 18 diametral gegenüberliegende Auslegerarme 16 vorgesehen, wobei der Verbindungsseilzug 8 um zugehörige Seilzapfen bzw. Seilrollen 17 S-förmig geschlungen ist. Die Federspannvorrichtung 15 ist mittels der Drehachse 18 drehbar an den Türaggregateträger 4 angelenkt. Zusätzlich ist eine die Drehachse 18 umschließende Schraubenfeder 19 vorgesehen. Ein Ende 20a der Schraubenfeder 19 stützt sich am Türaggregateträger 4, genauer an einem Zapfen 21, ab. Das andere Ende 20b der Schraubenfeder 19 liegt am Exzenter bzw. der Federspannvorrichtung 15 an. Die Drehachse 18 weist eine Durchgangsverschraubung 22 zur wahlweisen Fixierung der Stellung des Exzenters 15 und damit des als verstellbare Federbasis 20b wirkenden Endes 20b der Schraubenfeder 19 auf. Diese Durchgangsverschraubung 22 läßt sich selbst bei am Türinnenblech 2 angebrachten Türaggregateträger 4 betätigen. Hierzu dient im einfachsten Fall ein Schraubendreher. Das heißt, der Türaggregateträger 4 kann dichtend in die Montageöffnung 3 eingesetzt werden, wobei die für die Justage der Fensterscheibe 6 erforderlichen Maßnahmen unverändert durchgeführt werden können.

Die bereits beschriebene Seilspannvorrichtung 14 kann als am Türaggregateträger 4 angelenkter federunterstützter Schwenkhebel 14 ausgeführt sein, wie dies in Fig. 2 generell angedeutet und beispielsweise prinzipiell aus der deutschen Patentanmeldung 197 32 225 bekannt geworden ist (vgl. den dortigen Seilspanner 28). Alternativ hierzu ist es auch denkbar, wenngleich nicht explizit dargestellt, die Seilspannvorrichtung 14 als zwei koaxial gelagerte Wickeltrommeln auszuführen. Diese Wickeltrommeln lassen sich mittels einer Feder zur Aufrechterhaltung der Seilspannung des Seilzuges 7 in jeweils entgegengesetzter Wickelrichtung beaufschlagen. Mit anderen Worten wird hier so vorgegangen, wie dies in der deutschen Patentanmeldung 197 38 795 beschrieben ist, auf welche ausdrücklich Bezug genommen wird.

Der Türaggregateträger 4 läßt sich inklusive Führungsschienen 23 für die Scheibenträger 5a, 5b sowie den Scheibenträgern 5a, 5b, dem Antrieb 9 und schließlich dem Seilzug 7 sowie Verbindungsseilzug 8 inklusive Federspannvorrichtung 15 am Türinnenblech 2 montieren. Selbstverständlich gilt dies auch für eventuell vorgesehene Seilrollen 24, welche ebenfalls am Türaggregateträger 4 drehbar befestigt sind und zusammen mit diesem am Türinnenblech 2 angebracht werden können. Auch die Lautsprecher 10 können vormontiert werden. Im Zuge dieser Montage dichtet der Türaggregateträger 4 die Montageausnehmung 3 am Türinnenblech 2 dichtend ab, so daß keine Montageöffnungen verbleiben. Mit anderen Worten wird durch das Einsetzen des Türaggregateträgers 4 gleichzeitig ein Trockenraum im Inneren der Kraftfahrzeugtür definiert, ohne daß weitere (Dichtungs-)Maßnahmen erforderlich sind.

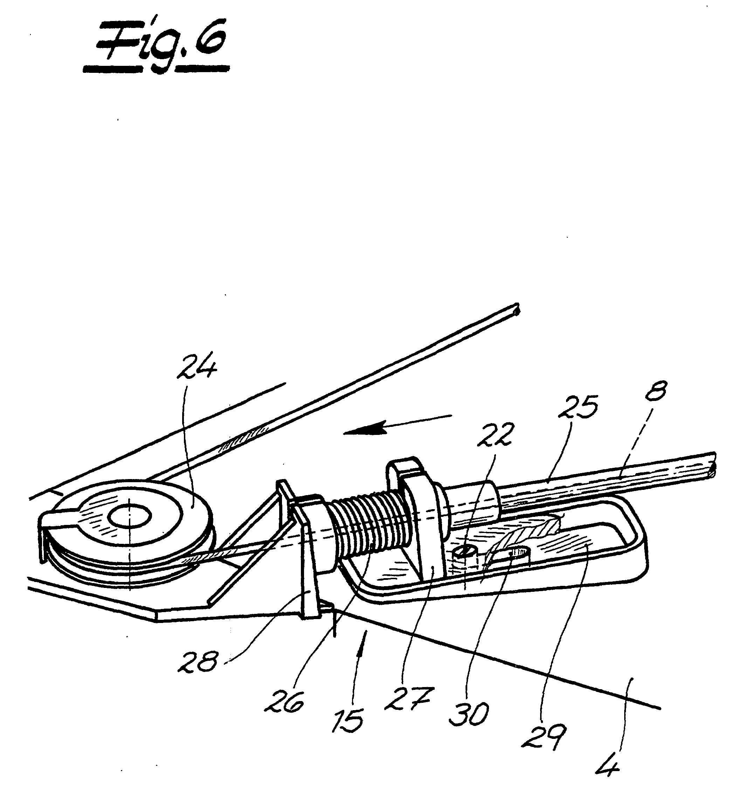

In den Fig. 5 und 6 ist eine abgewandelte Ausgestaltung der beschriebenen Federspannvorrichtung 15 dargestellt. Diese Federspannvorrichtung 15 ist so ausgeführt, daß der Verbindungsseilzug 8 mit der Seilzughülle 25 ausgerüstet wird. Diese Seilzughülle 25 weist endseitig die Druckfeder 26 auf. Wie zuvor beschrieben, läßt sich mit Hilfe der dargestellten Federspannvorrichtung 15 bzw. Druckfeder 26 in Verbindung mit der Seilzughülle 25 der Durchhang des Verbindungsseilzuges 8 verringern, um die Fensterscheibe 6 entsprechend gerade auszurichten. Dies ist in Fig. 5 durch den Übergang von der strichpunktierten (Verbindungsseilzug 8 mit Durchhang) zur punktierten Stellung (Verbindungsseilzug 8 mit fixierter Druckfeder 26) dargestellt.

Die Druckfeder 26 ist ausweislich der Fig. 6 einerseits an einem verschiebbaren Lagerbock 27 als verstellbare Federbasis 27 und andererseits an einem Festpunkt 28 abgestützt. Dieser Lagerbock 27 ist in eine Längsführung 29 verschiebbar eingesetzt. Die Längsführung 29 ist nach dem Ausführungsbeispiel an den Türaggregateträger 4 angeformt. Im Bereich der Längsführung 29 findet sich eine in Fig. 6 lediglich angedeutete Langlochbohrung 30. Diese Langlochbohrung 30 weist eine Durchgangsverschraubung 22 auf, die ähnlich wie im Ausführungsbeispiel nach Fig. 3b arbeitet. Mit anderen Worten läßt sich auch bei dieser Ausgestaltung mit Hilfe der Durchgangsverschraubung 22 eine Fixierung der Federspannvorrichtung 15 - vorliegend des Lagerbockes 27 - und damit der Druckfeder 26 erreichen.

Die Funktionsweise ist wie folgt: wird der Verbindungsseilzug 8 mit Hilfe des Antriebes 9 gespannt, ändert sich der in Fig. 5 dargestellte Durchhang. Gleichzeitig wird der Lagerbock 27 in Pfeilrichtung verschoben, so daß die Druckfeder 26 komprimiert wird. Sobald der erste Scheibenträger 5a blockiert, ist die Fensterscheibe 6 ausgerichtet, so daß mit Hilfe der Durchgangsverschraubung 22 der Lagerbock 27 am Türaggregateträger 4 unter Vorspannung der Druckfeder 26 fixiert werden kann. Dementsprechend ist die Fensterscheibe 6 dauerhaft ausgerichtet.

Bei dieser Ausgestaltung wird vorteilhafterweise auch beim Seilzug 7 mit einer (angedeuteten) Seilzughülle 31 gearbeitet, so daß beide Diagonalstrecken mit Seilzughüllen 25, 31 ausgerüstet sind. Nach dem Ausführungsbeispiel besteht die Seilzughülle 31 ausweislich der Fig. 5 aus zwei Teilstücken, so daß der Antrieb 9 lediglich den Seilzug als solchen selber auf- und abwickelt.

Jedenfalls verhindern die Seilzughüllen 25, 31 grundsätzlich, daß zwischen den jeweiligen Umlenkpunkten unerwünschte Kräfte beim Spannen entstehen. Hierfür sorgen zusätzlich zum einen die Druckfeder 26 und zum anderen die zusätzliche Seilspannvorrichtung 14, die grundsätzlich auch genauso arbeiten kann, wie die zuvor beschriebene Federspannvorrichtung 15, also als Seilzughülle 31 mit endseitiger Druckfeder und verschiebbarem Lagerbock. Hierdurch ist die jeweilige Länge der Seilzughülle 31 plus Feder bzw. Druckfeder variabel.

Immer wird erreicht, daß das jeweils lose in der Seilzughülle 25, 31 geführte Seil bzw. der Seilzug 7, 8 unter Spannung gehalten wird, auch wenn es - das Seil 7, 8 - durch Materialermüdung oder Temperatureinfluß Längungen erfährt.

## Patentansprüche

1. Seilfensterheber (5) für eine Kraftfahrzeugtür mit Fensterscheibe (6) mit folgenden Merkmalen:
a) an jeweils zumindest einen heb- und senkbaren ersten und zweiten Scheibenträger (5a, 5b) ist ein Seilzug (7) angeschlossen,
b) der Seilzug (7) ist mit einem reversierend arbeitenden Antrieb (9) ausgerüstet,
c) die beiden Scheibenträger (5a, 5b) sind zusätzlich durch einen Verbindungsseilzug (8) gekoppelt,
d) zur Justage der Fensterscheibe (6) bei Schrägstellung wird die Fensterscheibe (6) unter Blockade des zweiten Scheibenträgers (5b) mittels des nicht blockierten ersten Scheibenträgers (5a) bis zu dessen Blockade drehend ausgerichtet, oder umgekehrt,
e) die sich hierdurch erhöhende Spannung im Verbindungsseilzug (8) wird mit Hilfe einer Federspannvorrichtung (15) ausgeglichen,
**dadurch gekennzeichnet, daß**
f) die Federspannvorrichtung (15) dem Verbindungsseilzug (8) zugeordnet und zur Festlegung der Spannung des Verbindungsseilzuges (8) nach beendeter Justage fixierbar ist.

2. Seilfensterheber (5) nach Anspruch 1, **dadurch gekennzeichnet, daß** dessen sämtliche Bauteile auf einem Türaggregateträger (4) angeordnet sind, welcher in eine Montageausnehmung (3) eines Türinnenblechs (2) eingesetzt ist.

3. Seilfensterheber (5) nach Anspruch 1 oder 2, **dadurch gekennzeichnet, daß** die Federspannvorrichtung (15) an den Türaggregateträger (4) angelenkt ist und eine im Zuge ihrer Fixierung verstellbare Federbasis (20b, 27). aufweist.

4. Seilfensterheber (5) nach einem der Ansprüche 1 bis 3, **dadurch gekennzeichnet, daß** der Verbindungsseilzug (8) eine Seilzughülle (25) mit endseitiger Druckfeder (26) als Federspannvorrichtung (15) aufweist, wobei sich die Druckfeder (26) einerseits an einem verschiebbaren Lagerbock (27) als verstellbare Federbasis (27) und andererseits an einem Festpunkt (28) abstützt.

5. Seilfensterheber (5) nach Anspruch 4, **dadurch gekennzeichnet, daß** der Lagerbock (27) in eine Längsführung (29) eingesetzt und in Richtung des Verbindungsseilzuges (8) verschiebbar ist.

6. Seilfensterheber (5) nach einem der Ansprüche 1 bis 3, **dadurch gekennzeichnet, daß** die Federspannvorrichtung (15) als Exzenter (15) ausgebildet ist, welcher federunterstützt gegen den Verbindungsseilzug (8) angestellt ist.

7. Seilfensterheber (5) nach Anspruch 6, **dadurch gekennzeichnet, daß** der Exzenter (15) zumindest einen Auslegerarm (16) aufweist.

8. Seilfensterheber (5) nach Anspruch 6 oder **dadurch gekennzeichnet, daß** der Exzenter (15) zwei in bezug auf eine gemeinsame Drehachse (18) diametral gegenüberliegende Auslegerarme (16) aufweist, wobei der Verbindungsseilzug (8) um zugehörige Seilzapfen (17) S-förmig geschlungen ist.

9. Seilfensterheber (5) nach einem der Ansprüche 6 bis 8, **dadurch gekennzeichnet, daß** der Exzenter (15) mittels seiner Drehachse (18) drehbar an den Türaggregateträger (4) angelenkt ist und eine die Drehachse (18) umschließende Schraubenfeder (19) aufweist, wobei sich ein Ende (20a) der Schraubenfeder (19) am Türaggregateträger (4) und das andere Ende (20b) am Exzenter (15) abstützt und als verstellbare Federbasis (20b) wirkt.

10. Seilfensterheber (5) nach einem der Ansprüche 1 bis 9, **dadurch gekennzeichnet, daß** eine Durchgangsverschraubung (22) zur wahlweisen Fixierung der Federspannvorrichtung (15) vorgesehen ist.

## Claims

1. A cable window lifter (5) for a motor vehicle door comprising a window glass (6), having the following features:
a) a cable pull (7) is attached in each case to at least one raisable and lowerable first and second glass support (5a, 5b),
b) the cable pull (7) is equipped with a reversibly operating drive (9),
c) the two cable supports (5a, 5b) are additionally coupled by a connecting cable pull (8),
d) in order to adjust the window glass (6) when it is in an inclined position the window glass (6) is aligned in rotation, when the second glass support (5b) is blocked, by means of the first glass support (5a) which is not blocked, until the latter is blocked, or vice-versa,
e) the increasing tension which thereby occurs in the connecting cable pull (8) is compensated for by means of a spring tension device (15),
**characterised in that**
f) the spring tension device (15) is associated with the connecting cable pull (8) and can be fixed when adjustment is complete in order to fix the tension of the connecting cable pull (8).

2. A cable window lifter (5) according to claim 1, **characterised in that** all the components thereof are disposed on a door unit carrier (4) which is inserted in an installation recess (3) in a door interior panel (2).

3. A cable window lifter (5) according to claims 1 or 2, **characterised in that** the spring tension device (15) is coupled to the door unit carrier (4) and comprises a spring base (20b, 27) which can be adjusted in the course of being fixed.

4. A cable window lifter (5) according to any one of claims 1 to 3, **characterised in that** the connecting cable pull (8) comprises a cable pull sheath (25) with a compression spring (26) at its end as a spring tension device (15), wherein the compression spring (26) is supported at one end on a displaceable bearing block (27) as an adjustable spring base (27) and is supported at its other end on a fixed point (28).

5. A cable window lifter (5) according to claim 4, **characterised in that** the bearing block (27) is inserted in a longitudinal guide (29) and can be displaced in the direction of the connecting cable pull (8).

6. A cable window lifter (5) according to any one of claims 1 to 3, **characterised in that** the spring tension device (15) is formed as an eccentric (15) which can be placed in a spring-assisted manner against the connecting cable pull (8).

7. A cable window lifter (5) according to claim 6, **characterised in that** the eccentric (15) comprises at least one extension arm (16).

8. A cable window lifter (5) according to claims 6 or 7, **characterised in that** the eccentric (15) comprises two extension arms (16) which are diametrically opposed with respect to a common axis of rotation (18), wherein the connecting cable pull (8) is looped in the shape of an S around associated cable spigots (17).

9. A cable window lifter (5) according to any one of claims 6 to 8, **characterised in that** the eccentric (15) is rotatably coupled, by means of its axis of rotation (18), to the door unit carrier (4) and comprises a coil spring (19) which surrounds the axis of rotation (18), wherein one end (28) of the coil spring (19) is supported on the door unit carrier (4) and the other end (20b) is supported on the eccentric (15) and acts as an adjustable spring base (20b).

10. A cable window lifter (5) according to any one of claims 1 to 9, **characterised in that** a screwed through-joint (22) is provided for the fixation of the spring tension device (15) according to choice.

## Revendications

1. Lève-vitre à câble (5) pour une porte d'un véhicule automobile avec vitre de fenêtre (6) présentant les caractéristiques suivantes :
a) un câble de transmission (7) est raccordé à au moins un premier et un deuxième supports de vitre (5a, 5b) relevables et abaissables,
b) le câble de transmission (7) est équipé d'un dispositif d'entraînement (9) fonctionnant de manière réversible,
c) les deux supports de vitre (5a, 5b) sont accouplés en outre par un câble de liaison (8),
d) pour ajuster la vitre de fenêtre (6) en cas de position oblique, on oriente par rotation la vitre de fenêtre (6) en bloquant le deuxième support de vitre (5b) au moyen du premier support de vitre (5a) non bloqué, jusqu'à son blocage, ou inversement,
e) la tension qui augmente ainsi dans le câble de liaison (8) est compensée à l'aide d'un dispositif de tension à ressort (15),
**caractérisé en ce que**
f) le dispositif de tension à ressort (15) est associé au câble de liaison (8) et peut être fixé pour fixer la tension du câble de liaison (8) une fois l'ajustage terminé.

2. Lève-vitre à câble (5) selon la revendication 1, **caractérisé en ce que** tous ses composants sont disposés sur un support de bloc porte (4) qui est inséré dans un évidement de montage (3) d'une tôle intérieure (2) de la porte.

3. Lève-vitre à câble (5) selon la revendication 1 ou 2, **caractérisé en ce que** le dispositif de tension à ressort (15) est articulé sur le support de bloc porte (4) et comporte une base à ressort (20b, 27) qui peut être réglée au cours de sa fixation.

4. Lève-vitre à câble (5) selon l'une des revendications 1 à 3, **caractérisé en ce que** le câble de liaison (8) comporte une gaine de câble (25) avec ressort de compression (26) terminal servant de dispositif de tension à ressort (15), le ressort de compression (26) prenant appui d'une part sur un support (27) pouvant coulisser servant de base à ressort (27) réglable et d'autre part sur un point fixe (28).

5. Lève-vitre à câble (5) selon la revendication 4, **caractérisé en ce que** le support (27) est inséré dans un guide longitudinal (29) et peut coulisser dans la direction du câble de liaison (8).

6. Lève-vitre à câble (5) selon l'une des revendications 1 à 3, **caractérisé en ce que** le dispositif de tension à ressort (15) est conformé en excentrique (15) qui, soutenu par un ressort, est placé contre le câble de liaison (8).

7. Lève-vitre à câble (5) selon la revendication 6, **caractérisé en ce que** l'excentrique (15) comporte au moins un bras en porte-à-faux (16).

8. Lève-vitre à câble (5) selon la revendication 6 ou 7, **caractérisé en ce que** l'excentrique (15) comporte deux bras en porte-à-faux (16) diamétralement opposés par rapport à un axe de rotation (18) commun, le câble de liaison (8) passant en S autour de poulies de câble (17) correspondantes.

9. Lève-vitre à câble (5) selon l'une des revendications 6 à 8, **caractérisé en ce que** l'excentrique (15) est articulé tournant, au moyen de son axe de rotation (18), sur le support de bloc porte (4), et comporte un ressort hélicoïdal (19) entourant l'axe de rotation (18), une extrémité (20a) du ressort hélicoïdal (19) prenant appui sur le support de bloc porte (4) et l'autre extrémité (20b) sur l'excentrique (15), et servant de base à ressort (20b) réglable.

10. Lève-vitre à câble (5) selon l'une des revendications 1 à 9, **caractérisé en ce qu'**il est prévu un vissage traversant (22) pour la fixation au choix du dispositif de tension à ressort (15).
